# EUROPÄISCHE PATENTANMELDUNG

(11) **EP 1 279 899 A2**
(43) Veröffentlichungstag der Anmeldung: **29.01.2003**
(21) Anmeldenummer: 02405621.0
(22) Anmeldetag: 19.07.2002
(51) Int. Cl.: F24D 3/16, F24F 5/00

(54) **Vorrichtung zur Kühlung eines Raumes**

(30) Priorität: 26.07.2001 CH 139601
(71) Anmelder: LUK Agentur für Luft- und Klimasysteme AG, 8053 Zürich (CH)
(72) Erfinder: Roschmann, Klaus, 8730 Uznach (CH)
(74) Vertreter: Wagner, Wolfgang Heribert

(57) **Zusammenfassung**

Unterhalb einer mittels eines Rohres (2) eines Kühlkreises kühlbaren Decke (1) aus Stahlbeton sind als Lochplatten ausgebildete Kühlplatten (3) angeordnet, welche durch mit Wasser gefüllte geschlossene Koppelkreise (4) aus jeweils einem in der Decke (1) eingegossenen Kunststoffschlauch (5) und einem mit der Kühlplatte (3) verbundenen Metallrohr (6) thermisch an die Decke (1), insbesondere auch an deren Kern gekoppelt sind. Die Kühlung des Raumes kann auf diese Weise an die jeweiligen Bedürfnisse angepasst werden, indem die Kreisströmung in den Koppelkreisen (4) reguliert wird. Dies kann, da die Kreisströmung durch den Temperaturunterschied zwischen dem Raum und der Decke (1) angetrieben wird, durch Selbstregulierung geschehen oder auch mittels eines Regelventils. Die Kühlplatte (3) kann an der Oberseite eine Abschirmschicht (12) aus thermisch isolierendem Material tragen, welche die direkte thermische Kopplung zwischen dem Raum und der Decke (1) weiter schwächt. Die Koppelkreise (4) können auch jeweils derart mit dem Rohr (2) verbunden sein, dass die Strömung in demselben die Kreisströmungen in den Koppelkreisen (4) antreibt.

## Beschreibung

### Technisches Gebiet

Die Erfindung betrifft eine Vorrichtung zur Kühlung eines Raumes gemäss dem Oberbegriff des Anspruchs 1.

### Stand der Technik

Gattungsgemässe Vorrichtungen sind seit langer Zeit bekannt. S. dazu z. B. CH-A-679 069, wo eine Betondecke beschrieben ist, in welche ein Rohrsystem eingegossen ist, mittels dessen die Decke geheizt oder gekühlt werden kann.

Aehnliche Lösungen sind in der EP-A-0 637 721 und in verschiedenen Firmenbroschüren beschrieben, z. B. in 'Die thermoaktive Decke' der Firma Amstein + Walthert, gemäss welcher die Decke in Zwischenphasen zwischen Gebrauchsphasen, gewöhnlich in der Nacht, gekühlt wird sowie in 'Innovation 5' der TA-Media AG und in 'Kühlen und heizen mit thermoaktivem Bauteilsystem, Messe Zürich' der G&P Grünberg & Partner AG.

In jedem der zuletzt beschriebenen Fälle wird die thermische Trägheit des Deckenmaterials, in der Regel Beton, dazu benützt, mit geringem Energieaufwand die während des Tages gewöhnlich herrschenden hohen Temperaturen zu dämpfen, indem die Decke während der Nacht unter Ausnützung der tieferen Nachttemperaturen gekühlt wird.

Dabei tritt jedoch das Problem auf, dass die Temperatur der Decke während des Tages zunimmt und daher ihre Kühlwirkung entweder gegen Ende derselben nicht ausreicht oder zu Anfang derselben zu stark ist. In der Regel kann die Vorkühlung der Decke nicht im prinzipiell möglichen Umfang ausgenützt werden kann, da sonst die Temperaturen am Morgen zu tief sind, wenn nicht, wie in der EP-A-0 637 721 beschrieben, zum Einsatz einer Zusatzheizung Zuflucht genommen werden soll, was mit verschiedenen Nachteilen - Energieverbrauch, zusätzliche Installationen - verbunden ist. Zur Vermeidung grösserer Abweichungen der Raumtemperatur von der gewünschten Temperatur muss dann jeweils über die blossen Lüftungsbedürfnisse hinaus geheizte oder gekühlte Zuluft zugeführt werden, was ebenfalls einen hohen Energieverbrauch verursacht und auch stärkere Luftströmungen verursachen kann als mit optimalem Komfort verträglich ist.

Ebenfalls ungünstig ist es bei den bisher bekannten Arten der Raumkühlung durch eine vorgekühlte Decke, dass die Kühlleistung nicht an die Wärmebelastung des einzelnen Raums anpassbar ist. Diese kann je nach der Anzahl von Personen, laufenden Geräten etc. sehr unterschiedlich sein und von Raum zu Raum stark variieren und ist auch oft nicht vorhersehbar. Die Vorkühlung muss daher auf eine mittlere Wärmebelastung eingestellt werden. Die Einstellung auf die tatsächliche Belastung ist wieder nur mit hohem Energieverbrauch z. B. durch Zufuhr geheizter oder gekühlter Zuluft möglich.

Eine Lösung des beschriebenen Problems ist aus der EP-A-1 022 518 der Anmelderin bekannt. Gemäss dieser Schrift ist unterhalb der Decke eine Abschirmvorrichtung mit verstellbarer Wärmedurchlässigkeit angeordnet. Dies erlaubt eine Regulierung der Kühlwirkung der Decke auf den Raum. Insbesondere kann die Abschirmung der Decke allmählich verringert und dadurch die gewöhnlich zunehmende Wärmebelastung des Raumes ebenso wie die Zunahme der Deckentemperatur ausgeglichen werden.

Bei allen bekannten Vorrichtungen wird jedoch die Raumkühlung über die Decke durch deren Oberflächentemperatur bedingt, die gewöhnlich höher ist als die Kerntemperatur der Decke. So kann leicht der Fall eintreten, dass die Oberflächentemperatur bereits zu hoch ist, als dass eine ausreichende direkte Kühlung des Raumes über die Decke allein möglich wäre, während die Kerntemperatur noch tief genug für eine ausreichende Kühlung wäre, dies aber nicht ausgenutzt werden kann.

### Darstellung der Erfindung

Der Erfindung liegt die Aufgabe zu Grunde, eine gattungsgemässe Vorrichtung anzugeben, mit welcher das Prinzip der Kühlung über die Decke des zu kühlenden Raums flexibler und wirksamer eingesetzt werden kann als bei bekannten gattungsgemässen Vorrichtungen. Diese Aufgabe wird durch die Merkmale im Kennzeichen des Anspruchs 1 gelöst.

Bei Verwendung der erfindungsgemässen Vorrichtung kann die Kühlwirkung flexibel an die jeweilige Wärmebelastung des Raumes angepasst werden. Dabei ist die Kühlwirkung nicht durch die Oberflächentemperatur der Decke beschränkt, sondern es kann bei geeigneter Ausbildung des Koppelkreises die gewöhnlich tiefere und auch unmittelbarer beeinflussbare Kerntemperatur der Decke ausgenutzt werden. Die Decke kann auch ziemlich stark vorgekühlt werden, da das Ausmass, in dem sich ihre Temperatur auf diejenige des Raums auswirkt, mindestens in einem gewissen Rahmen regelbar ist.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1a: schematisch den Grundriss einer erfindungsgemässen Vorrichtung gemäss einer ersten Ausführungsform,
- Fig. 1b: einen senkrechten Schnitt durch einen Teil der erfindungsgemässen Vorrichtung gemäss der ersten Ausführungsform,
- Fig. 2a: schematisch den Grundriss einer erfindungsgemässen Vorrichtung gemäss einer zweiten Ausführungsform,
- Fig. 2b: einen senkrechten Schnitt durch einen Teil der erfindungsgemässen Vorrichtung gemäss der zweiten Ausführungsform,
- Fig. 3a: schematisch den Grundriss einer erfindungsgemässen Vorrichtung gemäss einer dritten Ausführungsform,
- Fig. 3b: einen senkrechten Schnitt durch einen Teil der erfindungsgemässen Vorrichtung gemäss der dritten Ausführungsform,
- Fig. 4a: schematisch den Grundriss einer erfindungsgemässen Vorrichtung gemäss einer vierten Ausführungsform,
- Fig. 4b: einen senkrechten Schnitt durch einen Teil der erfindungsgemässen Vorrichtung gemäss der vierten Ausführungsform,
- Fig. 5a: schematisch den Grundriss einer erfindungsgemässen Vorrichtung gemäss einer fünften Ausführungsform und
- Fig. 5b: einen senkrechten Schnitt durch einen Teil der erfindungsgemässen Vorrichtung gemäss der fünften Ausführungsform.

### Wege zur Ausführung der Erfindung

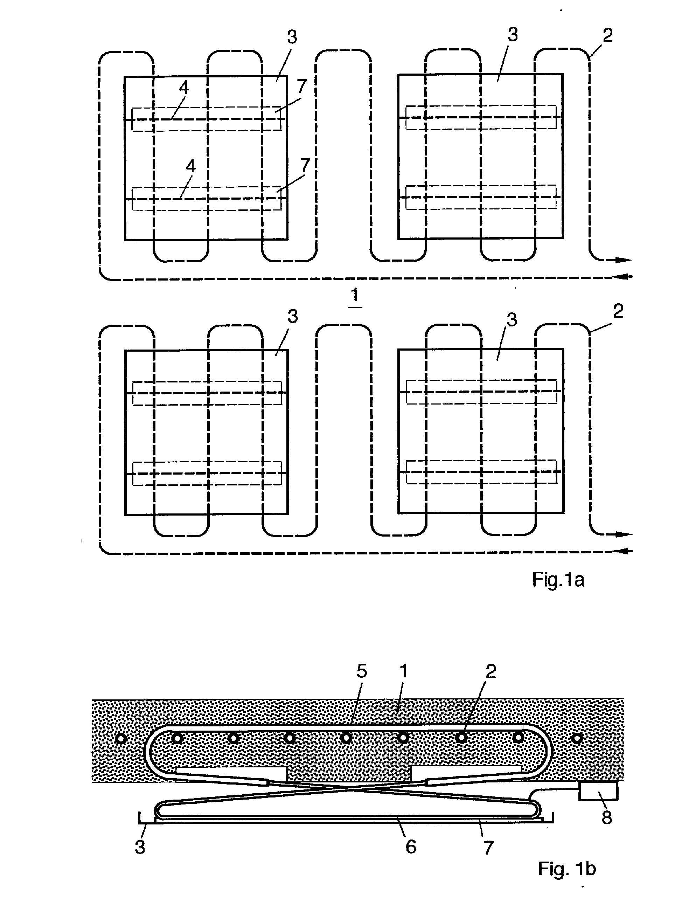

Die erfindungsgemässe Vorrichtung zur Kühlung eines Raumes umfasst gemäss der ersten Ausführungsform (Fig. 1a,b) eine kühlbare Decke 1 des zu kühlenden Raumes, welche vorzugsweise aus Stahlbeton besteht und etwa auf mittlerer Höhe von schlangenlinienförmigen Rohren 2 aus Kunststoff oder Metall durchzogen ist, das zu einem Kühlkreis gehört. Unterhalb der Decke sind als Kühlelemente in einem regelmässigen Muster waagrechte Kühlplatten 3 aufgehängt, welche im wesentlichen Lochplatten aus Metall, z. B. Aluminium sind, die von einem Akustikvlies bedeckt sein können. Die Kühlplatten 3 bedecken gewöhnlich zwischen 30% und 70% der Oberfläche der Decke 1 und bewirken auch eine teilweise thermische Abschirmung des Raumes gegenüber der Decke 1.

Jeder der Kühlplatten 3 sind zwei Koppelkreise 4 zugeordnet, die mit Abstand parallel zueinander angeordnet sind. Jeder Koppelkreis 4 besteht aus einem Primärabschnitt, einem Kunststoffschlauch 5, der derart in die Decke 1 eingegossen ist, dass er knapp oberhalb einiger Züge des Rohres 2 durchläuft und beidseits nach unten aus der Decke 1 herausgeführt ist und einem Sekundärabschnitt, einem Metallrohr 6, welches einen waggrechten unteren Abschnitt aufweist, der mit einer Schiene 7 verschweisst ist, einem Teil der Kühlplatte 3, der mit der Lochplatte verbunden, vorzugsweise ebenfalls verschweisst ist. An den waagrechten Abschnitt des Metallrohres 6 schliessen beidseits Abschnitte an, welche jeweils einen Bogen von beinahe 180° beschreiben und einander oberhalb der Kühlplatte 3 kreuzen. An das Metallrohr 6 ist über eine Leitung ein Ausdehnungsgefäss 8 angeschlossen. Auf die Enden des Metallrohres 6 sind die Enden des Kunststoffschlauchs 5 aufgesteckt, so dass der Koppelkreis 4 dicht und geschlossen ist. Der Koppelkreis 4 ist mit einer Kühlflüssigkeit gefüllt, in der Regel Wasser. Das Ausdehnungsgefäss 8 ist mit Gas gefüllt und dient dem Ausgleich temperaturbedingter Aenderungen des Volumens der Kühlflüssigkeit.

Die Koppelkreise 4 koppeln die Kühlplatte 3 jeweils thermisch mit dem Kern der Decke 1, in welchem auch das Rohr 2 liegt. Auf diese Weise kann die Kühlung des Raumes durch die Kühlplatten 3 über die Koppelkreise 4 gesteuert werden, und zwar kann dabei die volle Kühlkapazität der Decke 1 jederzeit ausgenützt werden, da die Temperatur der dem Raum zugewandten Oberfläche der Decke 1, die von der Vorgeschichte und den thermischen Eigenschaften der Decke 1 abhängt, für die Kühlwirkung nicht allein ausschlaggebend ist, sondern die Kerntemperatur, die in der Regel tiefer ist und auch durch den Kühlkreis direkt und nahezu verzögerungsfrei beeinflussbar ist, direkt ausgenützt werden kann.

Die Wirkung der Koppelkreise 4 kann einer Selbstregulierung überlassen werden, da in demselben eine Kreisströmung entsteht und aufrechterhalten wird, die vom Temperaturunterschied zwischen dem in der Decke 1 liegenden Primärabschnitt und dem mit der Kühlplatte 3 thermisch eng gekoppelten Sekundärabschnitt angetrieben wird. Dieser Unterschied ist um so grösser, je höher die Raumtemperatur ist, so dass sich die Zirkulation in den Koppelkreisen 4 und dadurch die Kopplung und die Kühlwirkung der Kühlplatten 3 bei zunehmender Raumtemperatur verstärkt. Es ist aber selbstverständlich auch möglich, die Zirkulation im Koppelkreis aktiv zu regulieren, z. B. durch ein in denselben eingebautes Regelventil, das die Kreisströmung in Abhängigkeit vom Ausgangssignal eines Temperaturfühlers o. dgl. regelt.

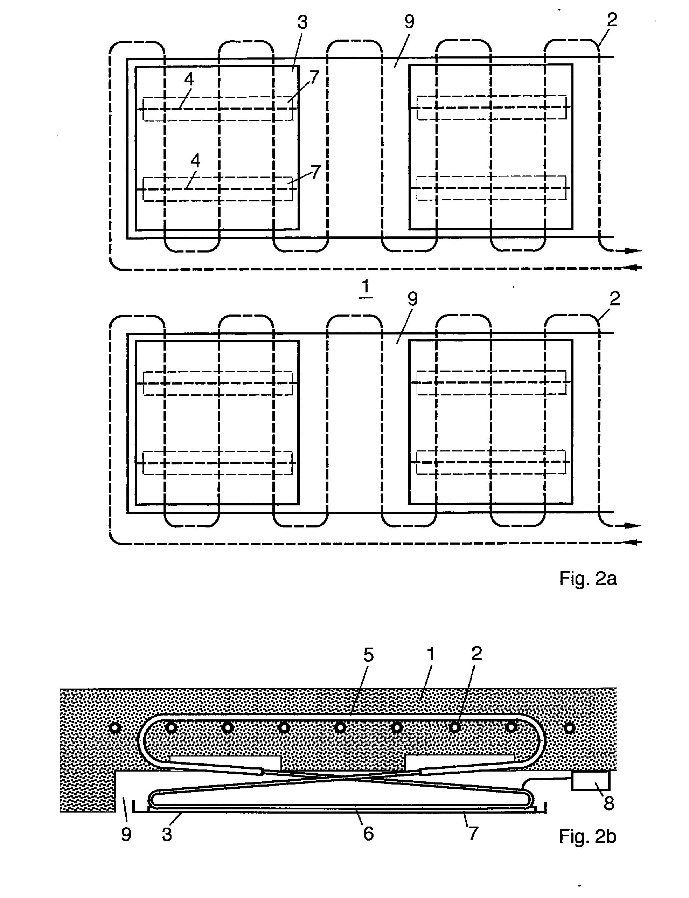

Die Kühlvorrichtung gemäss der zweiten Ausführungsform (Fig. 2a,b) unterscheidet sich von der eben beschriebenen lediglich dadurch, dass an der Unterseite der Decke 1 streifenförmige Vertiefungen 9 angebracht sind, die jeweils eine Reihe von Kühlplatten 3 aufnehmen, und zwar derart, dass sie mit dem verbleibenden Teil der Deckenoberfläche bündig sind.

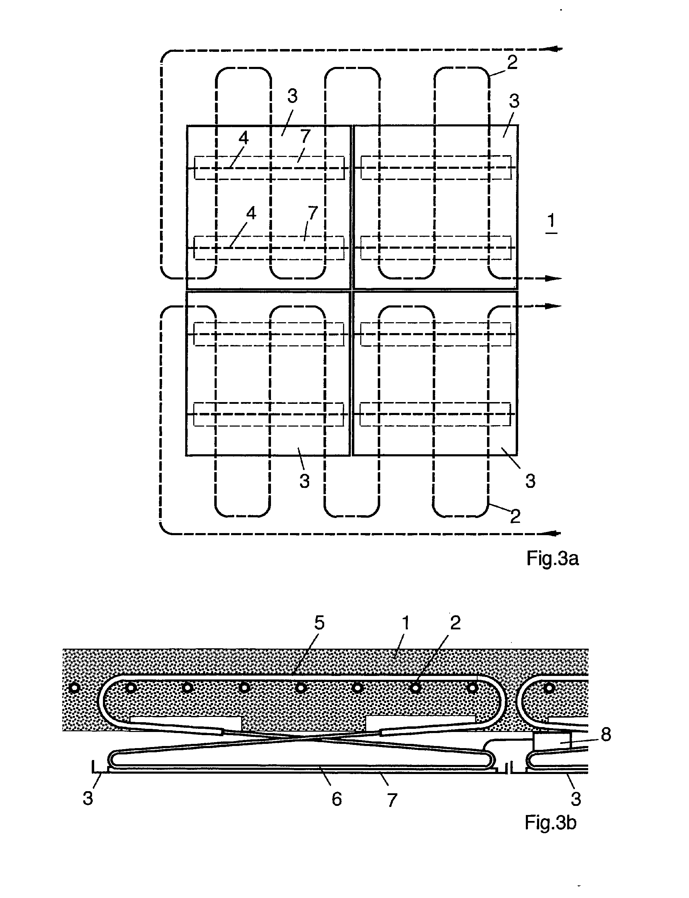

Die Kühlvorrichtung gemäss der dritten Ausführungsform (Fig. 3a,b) unterscheidet sich von der gemäss der ersten lediglich dadurch, dass jeweils mehrere, z. B. vier Kühlplatten 3 zu Inseln zusammengefasst sind, derart, dass sich dort die Ränder benachbarter Kühlplatten 3 nahezu berühren.

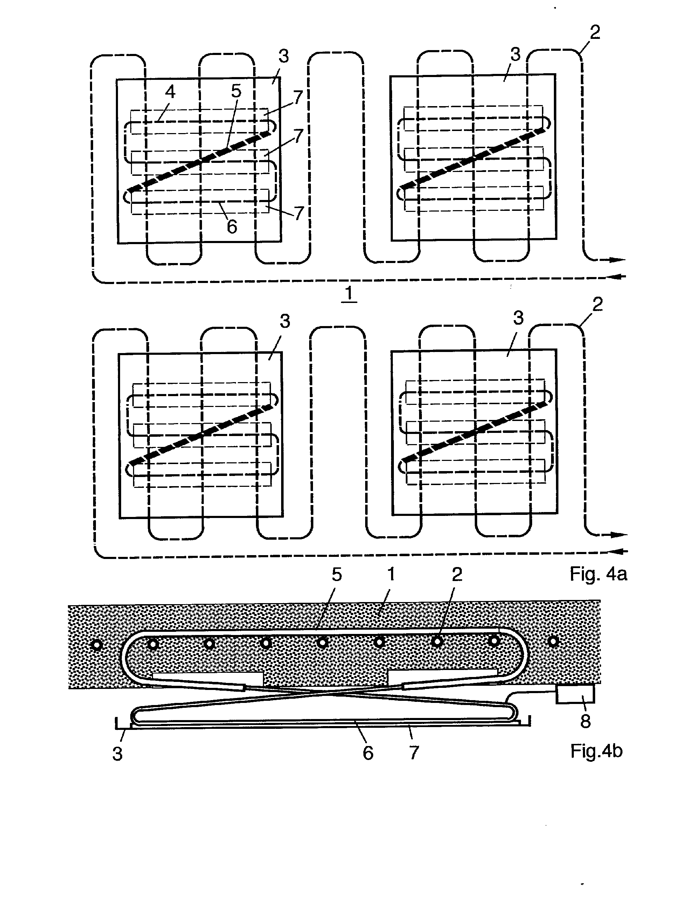

Bei der Kühlvorrichtung gemäss der vierten Ausführungsform (Fig. 4a,b) ist jeder Kühlplatte 3 ein einziger Koppelkreis 4 zugeordnet, wobei das Metallrohr 6 des Sekundärabschnitts schlangenlinienförmig über die Oberseite der Kühlplatte 3 läuft und seine Züge mit mehreren parallelen Schienen 7 derselben verschweisst sind.

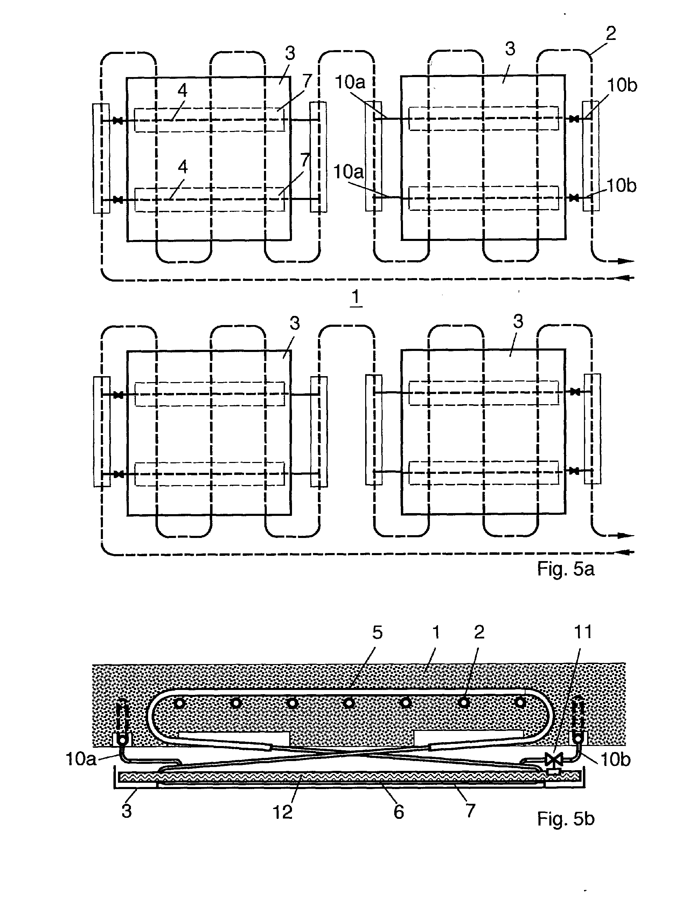

Statt durch ein Ausdehnungsgefäss 8 können die Volumenänderungen der Kühlflüssigkeit in einem Koppelkreis 4 auch dadurch aufgefangen werden, dass derselbe an einer Stelle durch eine Verbindungsleitung mit einer Stelle des Kühlkreises verbunden ist. Wie bei der Kühlvorrichtung gemäss der fünften Ausführungsform (Fig. 5a,b) gezeigt, können jedoch auch zwei Verbindungsleitungen 10a,b vorgesehen sein, welche jeweils verschiedene Stellen des Koppelkreises 4, die vorzugsweise im Bereich entgegengesetzter Enden des geraden Abschnittes des Metallrohres 6 liegen, mit ebenfalls verschiedenen, jeweils in der Nähe liegenden Stellen eines Rohres 1 des Kühlkreises verbinden. Dazu weist das Rohr 2 beidseits einer Kühlplatte 3 jeweils zwei tiefergelegte Züge auf, die in einer Vertiefung in der Decke 1 freiliegen. Auf diese Weise kann nämlich die Strömung des Kühlkreises dazu verwendet werden, die Kreisströmung im Koppelkreis 4 anzutreiben. Durch ein Regelventil 11 in einer der Verbindungen kann dieser Antrieb und damit der Grad der Wirksamkeit des Koppelkreises 4 eingestellt werden. Die Verbindung kann schwach, d. h. der Querschnitt der Verbindungsleitungen 10a,b klein sein.

Die Kühlplatte 3 und die mit ihr verbundenen Abschnitte Metallrohre 6 sind hier von einer Abschirmschicht 12 aus thermisch isolierendem Material bedeckt, die z. B. aus Steinwolle bestehen kann. Sie schirmt den Raum teilweise gegenüber der Decke 1 ab, so dass die nicht kontrollierbare direkte Kühlung desselben über die Decke 1 weiter geschwächt ist. Dies gestattet u. a. eine stärkere Vorkühlung der Decke 1, da sich eine tiefe Temperatur der Decke 1 zu Beginn einer Gebrauchsphase weniger stark auf die Raumtemperatur auswirkt. Eine so oder auch anders ausgebildete Abschirmung kann natürlich auch bei Kühlvorrichtungen gemäss den anderen beschriebenen Ausführungsformen vorgesehen werden.

Obwohl die im Vordergrund stehende Funktion die Kühlung des Raumes ist, können erfindungsgemässe Vorrichtungen mit ähnlichen Vorteilen auch zur Heizung eines Raumes über die Decke verwendet werden. In diesem Fall ist allerdings ein Antrieb der Kreisströmung in den Koppelkreisen, etwa wie im Zusammenhang mit der fünften Ausführungsform beschrieben, erforderlich.

### Bezugszeichenliste

- 1: Decke
- 2: Rohr
- 3: Kühlplatte
- 4: Koppelkreis
- 5: Kunststoffschlauch
- 6: Metallrohr
- 7: Schiene
- 8: Ausdehnungsgefäss
- 9: Vertiefung
- 10a,b: Verbindungsleitungen
- 11: Regelventil
- 12: Abschirmschicht

## Patentansprüche

1. Vorrichtung zur Kühlung eines Raumes, mit einer kühlbaren Decke (1), **dadurch gekennzeichnet, dass** unterhalb der Decke (1) eine Kühlvorrichtung mit mindestens einem zum Wärmeaustausch mit dem Raum geeigneten Kühlelement angeordnet ist, das in variabler Weise thermisch an die Decke (1) gekoppelt ist.

2. Vorrichtung nach Anspruch 1, **dadurch gekennzeichnet, dass** die thermische Kopplung an die Decke (1) den Kern derselben erfasst.

3. Vorrichtung nach Anspruch 1 oder 2, **dadurch gekennzeichnet, dass** sie zur thermischen Kopplung des mindestens einen Kühlelements an die Decke (1) mindestens einen von einem Kühlfluid durchströmbaren Koppelkreis (4) aufweist, welcher sowohl mit der Decke (1) als auch mit dem mindestens einen Kühlelement in wärmeleitender Verbindung steht.

4. Vorrichtung nach Anspruch 3, **dadurch gekennzeichnet, dass** im mindestens einen Koppelkreis (4) ein Ventil, vorzugsweise ein Regelventil angeordnet ist.

5. Vorrichtung nach Anspruch 3 oder 4, **dadurch gekennzeichnet, dass** der mindestens eine Koppelkreis (4) mindestens einen Primärabschnitt aufweist, welcher in der Decke (1) versenkt angeordnet ist.

6. Vorrichtung nach Anspruch 5, **dadurch gekennzeichnet, dass** der mindestens eine Primärabschnitt des Koppelkreises (4) als Kunststoffschlauch (5) ausgebildet ist.

7. Vorrichtung nach Anspruch einem der Ansprüche 3 bis 6, **dadurch gekennzeichnet, dass** der mindestens eine Koppelkreis (4) mindestens einen Sekundärabschnitt aufweist, welcher als Metallrohr (6) ausgebildet und mit dem Kühlelement verbunden, vorzugsweise verschweisst ist.

8. Vorrichtung nach den Ansprüchen 6 und 7, **dadurch gekennzeichnet, dass** die Enden eines jeden Kunststoffschlauchs (5) jeweils auf Enden mindestens eines Metallrohres (6) aufgesteckt sind.

9. Vorrichtung nach einem der Ansprüche 1 bis 8, **dadurch gekennzeichnet, dass** das mindestens eine Kühlelement eine waagrechte Kühlplatte (3) ist, die vorzugsweise als Lochplatte ausgebildet ist.

10. Vorrichtung nach einem der Ansprüche 1 bis 9, **dadurch gekennzeichnet, dass** zwischen der Decke (1) und dem mindestens einen Kühlelement eine Abschirmung von geringer thermischer Durchlässigkeit angeordnet ist.

11. Vorrichtung nach den Ansprüchen 9 und 10, **dadurch gekennzeichnet, dass** auf der mindestens einen Kühlplatte (3) eine Abschirmschicht (12) aus einem thermisch isolierenden Material angeordnet ist.

12. Vorrichtung nach einem der Ansprüche 1 bis 11, **dadurch gekennzeichnet, dass** sie mindestens ein Ausgleichsgefäss (8) aufweist, mit dem der mindestens eine Koppelkreis (4) verbunden ist.

13. Vorrichtung nach einem der Ansprüche 1 bis 12, **dadurch gekennzeichnet, dass** in die Decke (1) mindestens ein zur Leitung von Kühlfluid geeignetes Rohr (2) eingelassen ist, welches zu einem Kühlkreis gehört.

14. Vorrichtung nach Anspruch 13, **dadurch gekennzeichnet, dass** sie mindestens eine Verbindungsleitung (10a) umfasst, welche eine Stelle des mindestens einen Koppelkreises (4) mit einer Stelle des Kühlkreises verbindet.

15. Vorrichtung nach Anspruch 14, **dadurch gekennzeichnet, dass** sie mindestens eine weitere Verbindungsleitung (10b) umfasst, welche eine andere Stelle des mindestens einen Koppelkreises (4) mit einer anderen Stelle des Kühlkreises verbindet.

16. Vorrichtung nach Anspruch 15, **dadurch gekennzeichnet, dass** in mindestens einer Verbindungsleitung (10b) ein Ventil, vorzugsweise ein Regelventil (11) liegt.
